# EUROPEAN PATENT APPLICATION

(11) **EP 1 916 052 A2**
(43) Date of publication of application: **30.04.2008**
(21) Application number: 07117200.1
(22) Date of filing: 25.09.2007
(51) Int. Cl.: B23K 20/12, B23K 33/00

(54) **System, method and apparatus for reinforcing friction stir processed joints**

(30) Priority: 25.10.2006 US 586292
(71) Applicant: Lockheed Martin Corporation, Bethesda, Maryland 20817 (US)
(72) Inventor: Brice,Craig A., Keller,Texas 76248 (US); Barnes,John E., Roswell, Georgia 30076 (US)
(74) Representative: McCall, John Douglas

(57) **Abstract**

Friction stir welded joints are reinforced with a strengthening material (45) that is applied directly to the joint surfaces (35) to counteract the loss of desirable physical properties in the workpieces being joined. The strengthening material is stirred into the weld nugget (51) during processing and locates at the bond interfaces to form a more robust joint. The reinforcing substance is distributed throughout the nugget and counterbalances the loss of strength due to dissolution of the precipitates during processing.

## Description

### BACKGROUND OF THE INVENTION

### 1. Technical Field

The present invention relates in general to friction stir processing and, in particular, to an improved system, method, and apparatus for reinforcing friction stir welded joints with a topically applied reinforcing substance.

### 2. Description of the Related Art

Friction stir welding involves the joining of metals without fusion or filler materials. It is typically used for the joining of structural components made of aluminum and its alloys. The process results in strong and ductile joints, sometimes in systems that have proved difficult using conventional welding techniques. The process is most suitable for components that are flat and long (e.g., plates and sheets), but can be adapted for pipes, hollow sections, and positional welding. The welds are created by the combined action of frictional heating and mechanical deformation due to a rotating tool. Friction stir welding is a solid state process as the maximum temperature reached is on the order of 80% of the melting temperature of the workpieces.

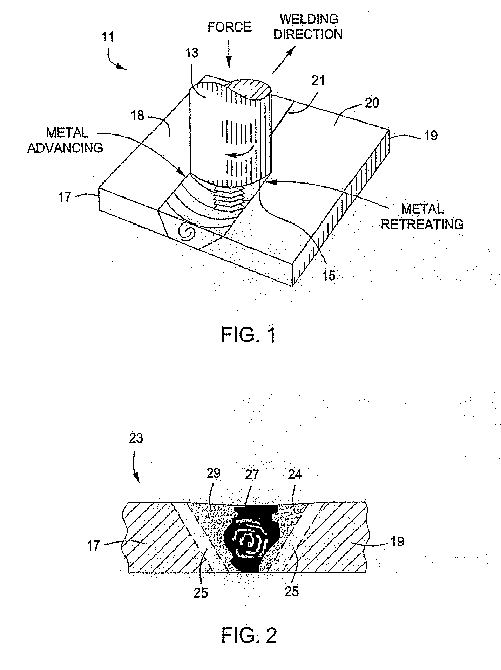

As shown in **Figure 1,** the tool 11 typically used for friction stir welding has a body 13 with a circular cross-sectional shape. The distal or lower end of the body 13 has a short threaded pin or probe, or more complicated flute protruding therefrom. The junction between the cylindrical body 13 and the probe is known as the shoulder 15. The workpieces 17, 19 are abutted or otherwise engaged to define an interface 21. The probe is used to penetrate the workpieces 17, 19 at the interface 21, whereas the shoulder 15 rubs the top surfaces 18, 20 of the workpieces 17, 19, respectively.

Heat is generated primarily by friction between the rotating and translating tool 11, again the shoulder 15 of which rubs against the top surfaces 18, 20 of the workpieces 17, 19, respectively. There is a volumetric contribution to heat generation from adiabatic heating due to deformation near the probe. The welding parameters are adjusted so that the ratio of frictional to volumetric deformation-induced heating decreases as the workpiece becomes thicker. This adjustment is made to ensure a sufficient heat input per unit length.

The microstructure of a friction stir weld 23 (Figure 2) depends in detail on the tool design, the rotation and translation speeds, the applied pressure, and the characteristics of the materials being joined. There are a number of zones associated with the process. The heat affected zone (HAZ) 25 is analogous to that in conventional welds. The central nugget region 27 containing an onion ring-like flow pattern is the most severely deformed region, although it frequently seems to dynamically recrystallize so that the detailed microstructure may comprise equiaxed grains. This layered structure is a consequence of the way in which a threaded tool deposits material from the front to the back of the weld. Cylindrical sheets of material are extruded during each rotation of the tool, which on a weld cross-section give the characteristic onion ring appearance.

An intermediate thermomechanically-affected zone 29 lies directly between the heat affected zone 25 and central nugget region 27. The grains of the original microstructure of the workpieces 17, 19 are retained in this region 29 but in a deformed state. The top surface 24 of the weld 23 has a different microstructure, a consequence of the shearing induced by the rotating tool shoulder.

In some welding applications (e.g., workpieces comprising 7000 series aluminum), the heat generated during welding causes precipitates in the weld nugget to redissolve. This lowers the strength of the weld with respect to the parent material. An aging heat treatment following the welding operation can restore the strength to the nugget. However, such heat treatments tend to overage the parent material and cause a corresponding loss in desirable physical properties. Thus, an improved solution for overcoming these problems in friction stir welding applications is needed.

### SUMMARY OF THE INVENTION

One embodiment of a system, method, and apparatus for reinforcing friction stir processed (e.g., welded) joints utilizes a strengthening material that is applied directly to the joint surfaces to counteract the loss of desirable physical properties in the workpieces being joined. The strengthening material comprises a reinforcing substance at the bond interfaces that is stirred into the weld nugget during processing to form a more robust joint. The reinforcing substance is distributed throughout the nugget and counterbalances the loss of strength due to dissolution of precipitates during processing.

The reinforcing substance may comprise many different forms, including a paste that is brushed onto the workpieces, a spray, a vapor coat, a sandwich foil, etc. The reinforcing substance is applied to the workpieces prior to processing by friction stir welding. Examples of materials that may be used to form the reinforcing substance include scandium-aluminum alloys, carbon nanotubes, ceramic materials, or still other materials capable of reestablishing or approximating the original strength of the parent materials prior to friction stir welding.

The foregoing and other objects and advantages of the present invention will be apparent to those skilled in the art, in view of the following detailed description of the present invention, taken in conjunction with the appended claims and the accompanying drawings.

### BRIEF DESCRIPTION OF THE DRAWINGS

So that the manner in which the features and advantages of the present invention, which will become apparent, are attained and can be understood in more detail, more particular description of the invention briefly summarized above may be had by reference to the embodiments thereof that are illustrated in the appended drawings which form a part of this specification. It is to be noted, however, that the drawings illustrate only some embodiments of the invention and therefore are not to be considered limiting of its scope as the invention may admit to other equally effective embodiments.

Figure 1 is a schematic isometric view of a friction stir processing apparatus for joining workpieces;

**Figure 2** is schematic sectional view of a weld formed by the process and apparatus of Figure 1;

Figure 3 is a top view of workpieces prior to formation of a butt joint therebetween and having one embodiment of a reinforcing medium applied thereto in accordance with the present invention;

**Figure 4** is a top view of workpieces prior to formation of a lap joint therebetween and having one embodiment of a reinforcing medium applied thereto in accordance with the present invention;

**Figure 5** is a top view of workpieces prior to formation of a finger joint therebetween and having one embodiment of a reinforcing medium applied thereto in accordance with the present invention;

**Figure 6** is schematic sectional view of one embodiment of a weld formed by a system, method, and apparatus in accordance with the present invention; and

**Figure 7** is a high level flow diagram of one embodiment of a method in accordance with the present invention.

### DETAILED DESCRIPTION OF THE INVENTION

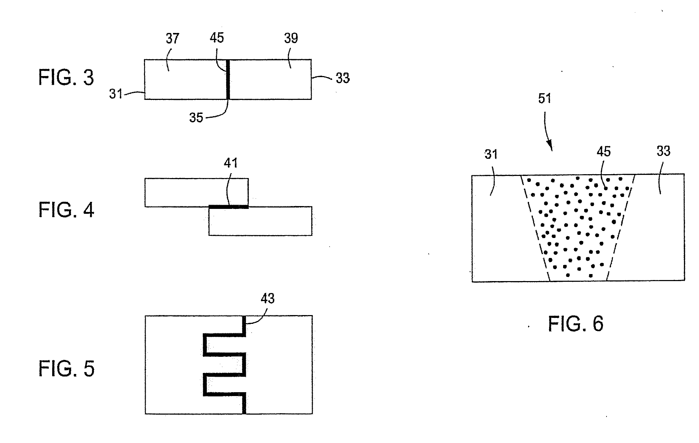

Referring to **Figures 3 - 6,** one embodiment of a system, method, and apparatus for reinforcing a weld formed by friction stir welding is disclosed. Initially, at least two workpieces 31, 33 **(Figure 3)** are abutted or otherwise engaged to define an interface 35 therebetween. For example, **Figure 3** depicts a butt joint, but other types of joints such as a lap joint 41 **(Figure 4),** a finger joint 43 **(Figure 5),** etc., also may be used.

Each of the workpieces 31, 33 has a top surface 37, 39, respectively, upon which is applied a strengthening material 45. The strengthening material 45 may be applied directly to the top surfaces 37, 39 of the workpieces 31, 33, respectively, at the interface 35. After application of the strengthening material, the workpieces are friction stir welded together with a tool (e.g., described above) at the interface 35 to form a weld 51 **(Figure 6).** As described above for **Figure 2,** the weld 51 may comprise a central weld nugget, a heat affected zone, and a thermomechanically-affected zone directly therebetween.

The strengthening material 45 is stirred with the friction stir welding tool into the weld 51 during the friction stir welding process, such that the strengthening material 45 is distributed throughout the central weld nugget of weld 51. The strengthening material 45 counterbalances a loss of strength in the workpieces 31, 33 due to dissolution of precipitates during processing. The weld 51 is cooled such that the strengthening material 45 counteracts a loss of desirable physical properties in the joined workpieces 31, 33. The strengthening material acts as a reinforcing substance at bond interfaces in the weld 51 during processing to form a more robust joint. The presence of the strengthening material 45 in the weld 51 approximates an original strength of the workpieces prior to friction stir welding.

In one embodiment, the strengthening material may take the form of materials such as pastes, sprays, vapor coats, or sandwich foils. In other embodiments, the strengthening material may comprise many different types of materials including, for example, scandium-aluminum alloys, carbon nanotubes, and ceramic materials.

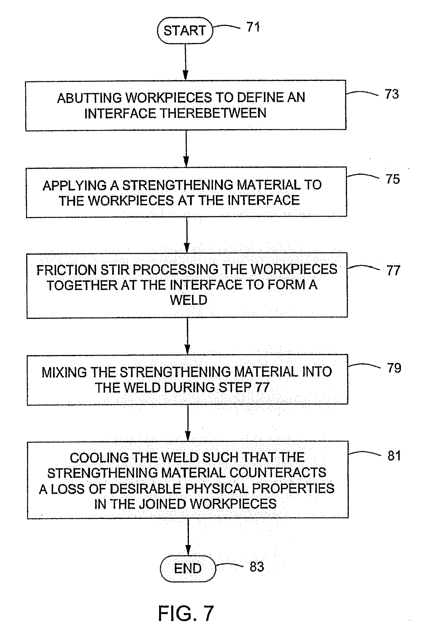

Referring now to **Figure 7,** a high level flow diagram of one embodiment of a method of joining workpieces in accordance with the present invention is shown. The method begins as indicated at step 71, and comprises abutting workpieces to define an interface therebetween (step 73); applying a strengthening material to the workpieces at the interface (step 75); friction stir processing the workpieces together at the interface to form a weld (step 77); mixing the strengthening material into the weld during step 77 (step 79); cooling the weld such that the strengthening material counteracts a loss of desirable physical properties in the joined workpieces (step 81); before ending as indicated at step 83.

The method also may comprise using the strengthening material as a reinforcing substance at bond interfaces in the weld during processing to form a more robust joint. The method may further comprise evenly distributing the strengthening material throughout the weld and counterbalancing a loss of strength in the workpieces due to dissolution of precipitates during processing. In one embodiment, the strengthening material may comprise a paste, a spray, a vapor coat, or a sandwich foil. In other embodiments, the strengthening material may comprise scandium-aluminum alloys, carbon nanotubes, or ceramic materials. The presence of the strengthening material in the weld approximates an original strength of the workpieces prior to formation of the weld.

### Some Aspects Of The Invention

A method of joining workpieces, comprising:
(a) abutting workpieces to define an interface therebetween;
(b) applying a strengthening material to the workpieces at the interface;
(c) friction stir processing the workpieces together at the interface to form a weld;
(d) mixing the strengthening material into the weld during step (c);
(e) cooling the weld such that the strengthening material counteracts a loss of desirable physical properties in the joined workpieces.

A method as described in paragraph [0025], wherein step (d) comprises using the strengthening material as a reinforcing substance at bond interfaces in the weld during processing to form a more robust joint.

A method as described in paragraph [0026], wherein the strengthening material is evenly distributed throughout a central weld nugget of the weld and counterbalances a loss of strength in the workpieces due to dissolution of precipitates during processing.

A method as described in paragraph [0026] or [0027], wherein the strengthening material is selected from the group consisting of paste, spray, vapor coat, and sandwich foil.

A method as described in paragraph [0026] or [0027], wherein the strengthening material is selected from the group consisting of scandium-aluminum alloys, carbon nanotubes, and ceramic materials.

A method as described in any one of paragraphs [0025] to [0029], wherein a presence of the strengthening material in the weld approximates an original strength of the workpieces prior to formation of the weld.

A method as described in any one of paragraphs [0025] to [0030], wherein the weld comprises a central weld nugget, a heat affected zone, and a thermomechanically-affected zone directly therebetween.

A method of reinforcing a weld formed by friction stir welding, comprising:
(a) abutting workpieces to define an interface therebetween, each of the workpieces having a top surface;
(b) applying a strengthening material directly to the top surfaces of the workpieces at the interface;
(c) friction stir welding the workpieces together with a tool at the interface to form a weld;
(d) stirring the strengthening material with the friction stir welding tool into the weld during step (c);
(e) cooling the weld such that the strengthening material counteracts a loss of desirable physical properties in the joined workpieces.

A method as as described in paragraph [0032], wherein step (d) comprises using the strengthening material as a reinforcing substance at bond interfaces in the weld during processing to form a more robust joint.

A method as described in paragraph [0033], wherein the strengthening material is evenly distributed throughout a central weld nugget of the weld and counterbalances a loss of strength in the workpieces due to dissolution of precipitates during processing.

A method as described in paragraph [0033] or [0034], wherein the strengthening material is selected from the group consisting of a paste, a spray, a vapor coat, and a sandwich foil.

A method as described in paragraph [0032], [0033] or [0034], wherein the strengthening material is selected from the group consisting of scandium-aluminum alloys, carbon nanotubes, and ceramic materials.

A method as described in any one of paragraphs [0032] to [0036], wherein a presence of the strengthening material in the weld approximates an original strength of the workpieces prior to friction stir welding.

A method as described in any one of paragraphs [0032] to [0037], wherein the weld comprises a central weld nugget, a heat affected zone, and a thermomechanically-affected zone directly therebetween.

A method of reinforcing a weld formed by friction stir welding, comprising:
(a) abutting two workpieces to define an interface therebetween, each of the workpieces having a top surface;
(b) applying a strengthening material directly to the top surfaces of the workpieces at the interface;
(c) friction stir welding the two workpieces together with a tool at the interface to form a weld comprising a central weld nugget, a heat affected zone, and a thermomechanically-affected zone directly therebetween;
(d) stirring the strengthening material with the friction stir welding tool into the weld during step (c), such that the strengthening material is evenly distributed throughout the central weld nugget and counterbalances a loss of strength in the workpieces due to dissolution of precipitates during processing; and
(e) cooling the weld such that the strengthening material counteracts a loss of desirable physical properties in the joined workpieces.

A method as described in paragraph [0039], wherein step (d) comprises using the strengthening material as a reinforcing substance at bond interfaces in the weld during processing to form a more robust joint.

A method as described in paragraph [0039] or [0040], wherein the strengthening material is selected from the group consisting of a paste, a spray, a vapor coat, and a sandwich foil.

A method as described in paragraph [0039], [0040] or [0041], wherein a presence of the strengthening material in the weld approximates an original strength of the workpieces prior to friction stir welding.

A method as described in paragraph [0039] or [0040], wherein the strengthening material is selected from the group consisting of scandium-aluminum alloys, carbon nanotubes, ceramic materials.

While the invention has been shown or described in only some of its forms, it should be apparent to those skilled in the art that it is not so limited, but is susceptible to various changes without departing from the scope of the invention.

## Claims

1. A method of joining workpieces, comprising:
(a) abutting workpieces to define an interface therebetween;
(b) applying a strengthening material to the workpieces at the interface;
(c) friction stir processing the workpieces together at the interface to form a weld;
(d) mixing the strengthening material into the weld during step (c);
(e) cooling the weld such that the strengthening material counteracts a loss of desirable physical properties in the joined workpieces.

2. A method as claimed in claim 1, wherein step (d) comprises using the strengthening material as a reinforcing substance at bond interfaces in the weld during processing to form a more robust joint.

3. A method as claimed in claim 1 or 2, wherein the strengthening material is evenly distributed throughout a central weld nugget of the weld and counterbalances a loss of strength in the workpieces due to dissolution of precipitates during processing.

4. A method as claimed in any one of the preceding claims, wherein the strengthening material is selected from the group consisting of paste, spray, vapor coat, and sandwich foil;
preferably wherein a presence of the strengthening material in the weld approximates an original strength of the workpieces prior to formation of the weld; and
wherein the weld preferably comprises a central weld nugget, a heat affected zone, and a thermomechanically-affected zone directly therebetween.

5. A method as claimed in any one of claims I to 3, wherein the strengthening material is selected from the group consisting of scandium-aluminum alloys, carbon nanotubes, and ceramic materials.

6. A method of reinforcing a weld formed by friction stir welding, comprising:
(a) abutting workpieces to define an interface therebetween, each of the workpieces having a top surface;
(b) applying a strengthening material directly to the top surfaces of the workpieces at the interface;
(c) friction stir welding the workpieces together with a tool at the interface to form a weld;
(d) stirring the strengthening material with the friction stir welding tool into the weld during step (c);
(e) cooling the weld such that the strengthening material counteracts a loss of desirable physical properties in the joined workpieces.

7. A method as claimed in claim 6, wherein step (d) comprises using the strengthening material as a reinforcing substance at bond interfaces in the weld during processing to form a more robust joint, and
wherein the strengthening material preferably is evenly distributed throughout a central weld nugget of the weld and counterbalances a loss of strength in the workpieces due to dissolution of precipitates during processing.

8. A method as claimed in claim 6 or 7, wherein the strengthening material is selected from the group consisting of a paste, a spray, a vapor coat, and a sandwich foil.

9. A method as claimed in claim 6 or 7, wherein the strengthening material is selected from the group consisting of scandium-aluminum alloys, carbon nanotubes, and ceramic materials.

10. A method as claimed in any one of claims 6 to 9, wherein a presence of the strengthening material in the weld approximates an original strength of the workpieces prior to friction stir welding, and
wherein the weld preferably comprises a central weld nugget, a heat affected zone, and a thermomechanically-affected zone directly therebetween.
